# EUROPEAN PATENT SPECIFICATION

(11) **EP 2 312 783 B1**
(45) Date of publication and mention of the grant of the patent: **07.03.2012**
(21) Application number: 09013043.6
(22) Date of filing: 15.10.2009
(51) Int. Cl.: H04L 1/00, H04L 12/26, H04L 12/24

(54) **Method and device for monitoring data transmission errors of a digital subscriber line**
Verfahren und Vorrichtung zur Überwachung von Datenübertragungsfehlern einer digitalen Teilnehmerleitung
Procédé et dispositif pour surveiller les erreurs de transmission de données d'une ligne d'abonné numérique

(43) Date of publication of application: 20.04.2011
(73) Proprietor: Swisscom AG, 3050 Bern (CH)
(72) Inventor: Oswald, Rudolf, 3014 Bern (CH)
(74) Representative: Rentsch Partner AG

(56) References cited:
- US-A1- 2002 039 352
- US-A1- 2002 141 443
- US-A1- 2005 237 940
- US-A1- 2008 155 087
- US-A1- 2009 161 569

## Description

### Field of the Invention

The present invention relates to a method and a device for monitoring data transmission errors of a digital subscriber line. Specifically, the present invention relates to a method and a device for monitoring in a residential local area network data transmission errors of a digital subscriber line connected to the residential local area network.

### Background of the Invention

Conventionally, broadband or "high-speed" Internet access is provided through digital subscriber lines (DSL). DSL or xDSL is a family of technologies that provides digital data transmission over the wires of a conventional (copper based) local telephone network (e.g. twisted pair). Typically, the download speed of consumer DSL services ranges from 256kbit/s to 24Mbit/s, depending on the particular DSL standard, line conditions, equipment used, and distance to the central office equipment (including e.g. a Digital Subscriber Line Access Multiplexer, DSLAM). Typically, upload speed is lower than download speed for Asymmetric Digital Subscriber Line (ADSL) and equal to download speed for the less common Symmetric Digital Subscriber Line (SDSL). The probability of data transmission errors occurring on a digital subscriber line increases with the proximity of bandwidth/transmission rate to the physical limits of the copper wire.

US 2005/0237940 describes a system which applies adaptively a target noise margin to a DSL loop for establishing a data rate on the DSL loop. According to US 2005/0237940 a remote ADSL transceiver unit of an end-user modem updates in real time a carrier's central ADSL transceiver unit with performance indicators, including errors which are mostly caused by transient, impulse, or non-stationary noise. A server queries a DSLAM or equivalent network device serving the DSL loop and obtains periodically an error performance of the DSL loop. If the error rate is found to be beyond a predetermined threshold, the server assigns to the DSL loop a different target noise margin. For example, the server may assign a value of target noise margin of 8 or 9 dB instead of 6 dB. If the error rate does not exceed the predetermined threshold, no changes to the DSL loop are made.

US 2002/0141443 describes a system for optimizing the bandwidth of a DSL connection. Customer Premise Equipment (CPE) and the DSLAM gather connection statistics including Signal to Noise Ratio (SNR), Cyclic Redundancy Check (CRC) count, and Loop Attenuation (LA). A DSL connection optimizer monitors the connection statistics from the CPE and/or the DSLAM and optimizes the transmission rate adaptively.

While the prior art systems are configured to set adaptively the transmission rate for a digital subscriber line, they have the disadvantages that the subscriber modems must report all errors detected at the physical layer, that the server must monitor periodically error performance on all DSL loops, and that the adjustment of the target noise margin or bandwidth, respectively, is limited exclusively to errors detected at the physical layer.

US2009/0161569A1 describes a metric system and methodology comprising various Ethernet and IP metrics for providing comparable network measurements. Specifically, the metric system allows determining quality of service and functionality between service providers and their costumers. Hardware based probes (called nodal members) generate and transmit measurement packets having a specific packet format. The probes perform network measurements over various network layers and the measurement data is transmitted periodically to a database.

### Summary of the Invention

It is an object of this invention to provide a method and a device for monitoring data transmission errors of a digital subscriber line, which method and device do not have the disadvantages of the prior art. In particular, it is an object of the present invention to provide a method and a device for monitoring in a residential local area network data transmission errors of a digital subscriber line for setting transmission rates (bit rates) for the digital subscriber line such that error rates are acceptable to applications and services used by the subscriber.

According to the present invention, these objects are achieved particularly through the features of the independent claims. In addition, further advantageous embodiments follow from the dependent claims and the description.

According to the present invention, the above-mentioned objects are particularly achieved in that for monitoring data transmission errors of a digital subscriber line connected to a residential local area network, the data transmission errors are determined in a device connected to the residential local area network based on checksum errors of protocol data units, received via the digital subscriber line, at a communication protocol layer above the physical layer and the data link layer. The term residential local area network refers to a local area network at a customer premise. Accordingly, the device connected to the residential local area network is considered customer premise equipment. The data transmission errors are reported by the device via the digital subscriber line to an error handling server, if the data transmission errors exceed a defined error limit. Preferably, the data transmission errors are determined based on checksum errors of protocol data units including TCP segments (Transmission Control Protocol), UDP datagrams (User Datagram Protocol) and/or other protocol data units at a communication protocol layer above network and transport layers. In addition or alternatively, the data transmission errors may also be based on checksum errors of IP packets (Internet Protocol). Detecting the data transmission errors at a communication protocol layer above the physical and data link layers as defined by the OSI Reference Model (Open Systems Interconnection), e.g. at the network layer (IP) and/or the transport layer (TCP, UDP), and/or at communication protocol layers above the network and transport layers, e.g. at the session layer, the presentation layer and/or the application layer, has the advantage that error detection is not limited to detecting errors at the physical layer, as modems of conventional systems. Particularly, detecting the data transmission errors at the transport layer makes it possible to detect errors related to the actual application-specific payload data. In an embodiment, application-specific data transmission errors are determined based on port numbers included in TCP segments and UDP datagrams. Detecting the data transmission errors at layers above the physical and data link layers makes it possible to determine a performance or error measure that reflects more accurately the impact of data transmission errors on respective applications than the mere detection of errors at the physical layer. Hence, the error detection above the physical and data link layers makes it possible to produce a performance or error measure that is more indicative of user perception and customer experience than the counting of errors at the physical layer provided by conventional systems.

In an embodiment, the error handling server or a configuration server adjusts the transmission rate of the digital subscriber line depending on the data transmission errors reported by the device of the residential local area network. Adjusting the transmission rate based on the data transmission errors detected at layers above the physical and data link layers makes it possible to optimally push the data transmission to the physical limits of the digital subscriber line, while maintaining for the user a satisfactory application performance and customer experience.

Preferably, the defined error limit is determined depending on applications and/or services required for the residential local area network, i.e. applications and/or services registered, requested and/or used by the user(s) of the residential local area network. For example, the defined error limit is received in the device (as an initial value or a dynamic adjustment) from the error handling server via the digital subscriber line, and the defined error limit is stored in the device. In a variant (in addition or alternatively), the defined error limit is determined dynamically in the device. Defining an application or service specific error limit makes it possible to set for the respective subscriber line, e.g. as a dynamic adjustment, an application or service specific transmission rate which optimally pushes the data transmission to the physical limits of the digital subscriber line, while maintaining for the user a satisfactory application performance and customer experience.

In an embodiment, the defined error limit includes a maximum error number and a defined time window, and the data transmission errors are reported, if the data transmission errors exceed the maximum error number within the defined time window. Using an error limit with a maximum number of errors and a defined time window makes it possible to detect even short bursts of errors, if the length of the time window is set accordingly (the length or duration of the time window can be defined by a length of time or a number of datagrams).

In another embodiment, the defined error limit further includes an extended time window which has a duration corresponding to multiple defined time windows, and an extended error number which is higher than the maximum error number. The data transmission errors are reported, if the data transmission errors exceed the extended error number within the extended time window. Using an extended time window and an extended error number makes it possible to detect an occurrence of data transmission errors that does not exceed the maximum number of errors within the defined time window, but exceeds the extended error number within the extended time window.

In addition to the method and device for monitoring data transmission errors of a digital subscriber line connected to a residential local area network, the present invention also relates to a computer program product comprising computer program code means for controlling one or more processors of a device connectible to the residential local area network, preferably a computer program product comprising a tangible computer-readable medium containing the computer program code means therein. Preferably, the computer program code means are configured to control the processors such that the device determines data transmission errors of the digital subscriber line connected to the residential local area network based on checksum errors of protocol data units, received in the device via the digital subscriber line, at a communication protocol layer above the physical layer and the data link layer, and reports the data transmission errors via the digital subscriber line to an error handling server, if the data transmission errors exceed a defined error limit.

### Brief Description of the Drawings

The present invention will be explained in more detail, by way of example, with reference to the drawings in which:
Figure 1 shows a block diagram illustrating schematically a system for monitoring data transmission errors of a digital subscriber line connected to a residential local area network.
Figure 2 shows a block diagram illustrating schematically a device for monitoring in a residential local area network data transmission errors of a digital subscriber line connected to the residential local area network.
Figure 3 shows a layer diagram illustrating schematically the different layers of a communication protocol stack according to the OSI Reference Model.
Figure 4 shows a block diagram illustrating schematically data elements of an exemplary error limit.
Figure 5 shows a block diagram illustrating schematically data elements of another exemplary error limit.
Figure 6 shows a time line with defined time windows and data transmission errors occurring in these defined time windows.
Figure 7 shows a timing diagram illustrating an exemplary sequence of steps for monitoring data transmission errors of a digital subscriber line connected to a residential local area network.

### Detailed Description of the Preferred Embodiments

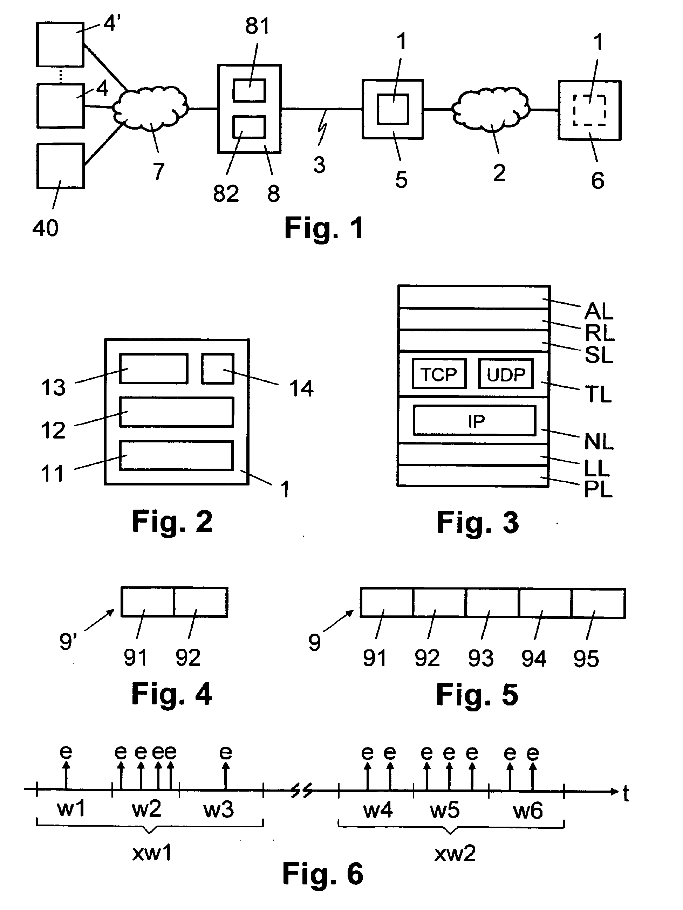

In Figure 1, reference numeral 2 refers to a residential local area network (LAN), i.e. a LAN at a customer premise, for example a wired LAN and/or a wireless LAN (WLAN). Connected to the residential LAN are one or more communication terminals 6, e.g. a personal computer, a personal digital assistant (PDA), a mobile radio telephone, or other customer premise equipment.

The residential LAN 2 is connected via a customer premise networking device 5 to a digital subscriber line 3. The customer premise networking device 5 comprises a DSL modem. In a preferred embodiment, the customer premise networking device 5 further comprises a (LAN) router, e.g. a WLAN router. The digital subscriber line 3 connects the customer premise networking device 5, and thus the residential LAN 2, to central office equipment 8. The central office equipment 8 comprises a switching unit 81 and a Digital Subscriber Line Access Multiplexer (DSLAM) 82, for example. The central office equipment 8 connects the digital subscriber line 3, and thus the residential LAN 2, to telecommunications network 7, e.g. the Internet or another IP-based network accessed via an Internet Service Provider (ISP).

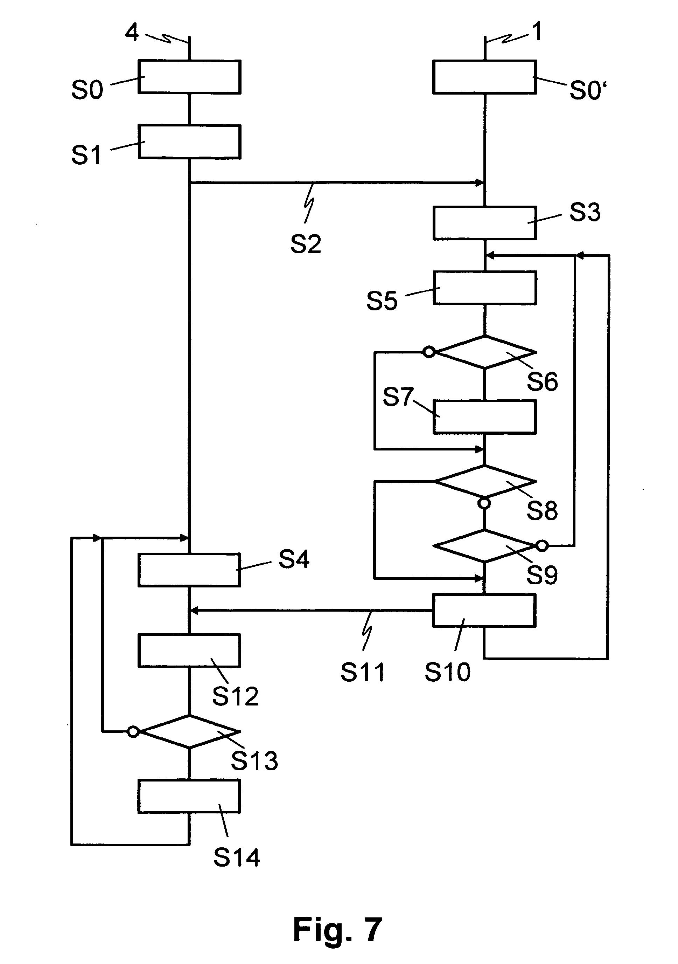

In Figures 1 and 7, reference numeral 4 refers to a computerized error handling server, reference numeral 4' refers to an optional configuration server, and reference numeral 40 refers to a computerized application server. The error handling server 4, the configuration server 4', and the application server 40 are connected to telecommunications network 7.

In Figures 1, 2 and 7, reference numeral 1 refers to a device for monitoring in the residential LAN 2 data transmission errors of the digital subscriber line 3 connected to the residential LAN 2 as well as data transmission errors associated with telecommunications network 7.

As is illustrated in Figure 1, the monitoring device 1 is implemented in - or as - the customer premise networking device 5, and/or alternatively in - or as - other customer premise equipment, e.g. in - or as - communication terminal 6.

As illustrated in Figure 2, the monitoring device 1 comprises various functional modules, specifically, an error measurement module 11, an error reporting module 12, and a configuration module 13. Preferably, the functional modules are implemented as programmed software modules. The computer program code of the software modules is stored in a computer program product, i.e. in a tangible computer readable medium, either in memory integrated in the monitoring device 1 or on a tangible data carrier (data storage device) that can be inserted into the monitoring device 1. The computer program code of the software modules controls a processor of the monitoring device 1 so that the monitoring device 1 executes various functions described later in more detail with reference to Figure 7. One skilled in the art will understand, however, that in alternative embodiments, the functional modules can be implemented partly or fully by means of hardware.

In the following paragraphs, described with reference to Figure 7 are possible sequences of steps performed by the functional modules for monitoring in the residential LAN 2 data transmission errors associated with the digital subscriber line 3.

In (optional) preparatory step S0, the error handling server 4 defines an error limit 9, 9' (see Figures 4 or 5, respectively) for the digital subscriber line 3, which error limit 9, 9' is to be applied by the residential LAN 2. As will be described later in more detail, the error limit 9, 9' is preferably defined depending on the applications and/or services used by users of the residential LAN 2.

As illustrated in Figure 7, in step S1, the error handling server 4 or the configuration server 4' initiates configuration of the residential LAN 2 with the defined error limit 9, 9'.

In step S2, the defined error limit 9, 9' is transmitted from the error handling server 4 or the configuration server 4' via the digital subscriber line 3 to the monitoring device 1 of the residential LAN 2. Subsequently, after (re-)configuration of the monitoring device 1, in step S4, the error handling server 4 waits for error report messages from the monitoring device 1.

In step S3, the configuration module 13 of the monitoring device 1 receives the defined error limit 9, 9' and stores it in a data store 14 of the monitoring device 1.

Alternatively, the error limit 9, 9' is defined and stored in the monitoring device 1 through other configuration processes, e.g. as part of a service registration process performed by a service and/or telecom provider or operator, respectively. In an embodiment, the configuration module 13 is configured to determine (dynamically) the defined error limit 9, 9', in step S0' depending on the applications and/or services currently used by users of the residential LAN 2, as will be explained later in more detail.

As illustrated in Figure 4, the defined error limit 9' comprises a maximum error number 91 and a defined time window 92. For example, the maximum error number 91 specifies the maximum number of erroneous data packets, i.e. the maximum number of protocol data units, such as a TCP segment, a UDP datagram, or an IP packet, having a checksum error. For example, the defined error limit 9' specifies a maximum error number 91 of three erroneous data packets within a defined time window 92 whereby the length or duration of the time window 92 is defined by a length of time, e.g. five minutes, or, preferably, a number of datagrams, e.g. twenty datagrams.

In a preferred embodiment, illustrated in Figure 5, the defined error limit 9 further comprises an extended error number 93 which is higher than the maximum error number 91, and an extended time window 94 which is longer than the defined time window 92 and has a duration which corresponds to multiple defined time windows 92, for example. For example, the defined error limit 9 specifies an extended error number 93 of five erroneous data packets within an extended time window 94 of ten minutes or forty datagrams, respectively.

One skilled in the art will understand that different values, durations, and/or multiples can be specified for the error limit 9, 9' without deviating from the scope of the invention.

As stated above, the defined error limit 9, 9' is preferably determined depending on applications and/or services used by users of the residential LAN 2. Specifically, the defined error limit 9, 9', i.e. the values of the maximum error number 91, the defined time window 92, the extended error number 93 and/or the extended time window 94, is determined based on the respective set of applications and/or services or types of applications and/or services, respectively, using an error limit table which comprises application and/or service specific error limits 9, 9', as outlined in exemplary Table 1.

**Table 1**

| Error limit table | | | | |
|---|---|---|---|---|
| Application or service (type) | Error limit | | | |
| | Maximum error number | Defined time window | Extended error number | Extended time window |

In an embodiment, the defined error limit 9, 9' is determined depending on applications and/or services which are registered for the user(s) of the residential LAN, i.e. the set/types of applications and/or services for which there is a subscription by the respective user(s). For that purpose, the error handling server 4 (or the monitoring device 1) maintains a LAN-specific registered application and/or service table. Alternatively, the error handling server 4 (or the monitoring device 1) retrieves data about LAN-specific application and/or service subscriptions for users of the respective residential LAN 2 from respective service providers and/or operators.

In another embodiment, the defined error limit 9, 9' is determined dynamically depending on the current set of applications and/or services requested and/or used by the respective user(s) of the residential LAN 2 via the digital subscriber line 3 from one or more application servers 40. For that purpose, the monitoring device 1 (or the error handling server 4) maintains a LAN-specific used applications and/or services table (or retrieves LAN-specific data about applications and/or services which are currently requested/used by the respective user(s) of the residential LAN 2).

For example, the types of applications and/or services include IP-based applications and/or services, such as voice over IP, television over IP, other audio and/or video streaming services over IP, and/or web browsing, etc.

Depending on the embodiment, the error limit 9, 9' is defined for a residential LAN 2 as a set of application-specific error limits and/or as a cumulative LAN-specific error limit which is based on a sum of application-specific maximum and/or extended error numbers.

In step S5, the error measurement module 11 of the monitoring device 1 analyzes a data packet received via the digital subscriber line 3; specifically, the error measurement module 11 analyzes a protocol data unit received via the digital subscriber line 3 at a protocol layer above the Physical Layer PL (Layer 1) and the Data Link Layer LL (Layer 2), as defined by the OSI Reference Model which is illustrated schematically in Figure 3. Preferably, the monitoring device 1 analyzes at the Transport Layer TL (Layer 4) the TCP segment and/or the UDP datagram with regards to the checksum included therein. In an embodiment, the monitoring device 1 analyzes at the Network Layer NL (Layer 3) the IP packet with regards to the checksum included therein. One skilled in the art will understand that data transmission errors could also be detected at layers above the Transport Layer TL (Layer 4) , e.g. at the Session Layer SL (Layer 5), the Presentation Layer RL (Layer 6) or the Application Layer AL (Layer 7). For example, a data transmission error detected at the Application Layer AL (Layer 7) could be based on a checksum error or another error indicator included in a TV or video frame.

In step S6, the error measurement module 11 determines whether or not the received data packet is erroneous, i.e. whether or not the checksum included in the TCP segment, the UDP datagram and/or the IP packet (and/or in data packets above the Transport Layer TL) does not match a checksum calculated from the respective data received with the data packet and thus indicates a data transmission error e (see Figure 6). Preferably, checksum errors are detected and tracked separately for the TCP segment, the UDP datagram and/or the IP packet (and/or for data packets above the Transport Layer TL). In an embodiment, checksum errors are detected and tracked separately for individual applications which are identified by port numbers included in the TCP segment and the UDP datagram, i.e. data transmission errors e are detected and tracked separately for individual applications and/or services used by user(s) in the residential LAN 2. If a data transmission error e has been detected, the error measurement module 11 continues in step S7; otherwise, the error measurement module 11 continues in step S8.

In step S7, the error measurement module 11 tracks detected data transmission errors e by incrementing for the current time window w1, w2, w3, w4, w5, w6 (see Figure 6) one or more respective error counters. Depending on the embodiment, separate error counters are provided for individual applications/services, TCP segments, UDP datagrams and/or the IP packets (and/or for data packets above the Transport Layer TL), as illustrated in exemplary Table 2. For an embodiment based on sliding time windows rather than sequential time windows, detected data transmission errors e are stored and provided with a time stamp, if applicable.

**Table 2**

| Application/service | TCP error | UDP error | IP error | Total error |
|---|---|---|---|---|
| A1 | TCP-A1 | UDP-A1 | IP-A1 | E-A 1 |
| ... | ... | ... | ... | ... |
| An | TCP-An | UDP-An | IP-An | E-An |
| Cumulative errors | Cumulative TCP error | Cumulative U DP error | Cumulative IP error | Cumulative total error |

In step S8, the error measurement module 11 determines whether the defined maximum error number 91 has been exceeded for the current time window w1, w2, w3, w4, w5, w6. If the defined maximum error number 91 has been exceeded, the error measurement module 11 continues in step S10; otherwise, the error measurement module 11 continues in step S9. For example, with a defined maximum error number 91 of three, in Figure 6, the defined maximum error number 91 is exceeded in time window w2 with a detected number of four data transmission errors e.

In step S9, the error measurement module 11 determines whether the extended maximum error number 93 has been exceeded for the current extended time window xw1, xw2. If the extended maximum error number 93 has been exceeded, the error measurement module 11 continues in step S10; otherwise, the error measurement module 11 continues in step S5. For example, with an extended error number 93 of six, in Figure 6, the extended error number 93 is exceeded in extended time window xw2 with a detected number of seven data transmission errors e.

In step S10, the error reporting module 12 generates an error report message indicative of excessive data transmission errors e in a defined time window w1, w2, w3, w4, w5, w6 or an extended time window xw1, xw2 as detected in steps S8 or S9, respectively.

In step S11, the error reporting module 12 transmits the error report message via the digital subscriber line 3 and telecommunications network 7 to error handling server 4.

In step S12, the error handling server 4 receives the error report message and updates the total error count for the respective digital subscriber line 3 or residential LAN 2, respectively.

In step S13, the error handling server 4 determines whether the total error count for the respective digital subscriber line 3 or residential LAN 2, respectively, exceeds a defined threshold which represents a minimum quality of service. If the threshold is exceeded and the minimum quality of service is no longer achieved, the error handling server 4 continues in step S14; otherwise, if the minimum quality of service can be maintained, the error handling server 4 continues in step S4.

In step S14, the error handling server 4, or alternatively the configuration server 4' (upon instruction from the error handling server 4), defines and sets an adjusted data transmission (bit) rate for the respective digital subscriber line 3, e.g. by lowering the data transmission (bit) rate, and proceeds in step S4. In an embodiment, the data transmission (bit) rate for the respective digital subscriber line 3 is periodically increased to its originally configured value, in order to push the digital subscriber line 3 to its physical limit.

In an embodiment, the reception of any report message will result in the data handling server 4 or the configuration server 4' adjusting the data transmission (bit) rate for the respective digital subscriber line 3.

It should be noted that, in the description, the computer program code has been associated with specific functional modules and the sequence of the steps has been presented in a specific order, one skilled in the art will understand, however, that the computer program code may be structured differently and that the order of at least some of the steps could be altered, without deviating from the scope of the invention.

## Claims

1. Method of monitoring data transmission errors (e) of a digital subscriber line (3) connected to a residential local area network (2), the method comprising:
determining (S6) in a device (1) connected to the residential local area network (2) the data transmission errors (e) based on checksum errors of protocol data units, received via the digital subscriber line (3), at a communication protocol layer above physical and data link layers (PL, LL); and
reporting (S10) the data transmission errors (e) by the device (1) via the digital subscriber line (3) to an error handling server (4), **characterized in that** said reporting is performed for cases where the data transmission errors (e) exceed a defined error limit (9, 9').

2. The method of claim 1, **characterized by** determining (S0 S0') the defined error limit (9, 9') depending on applications and/or services required for the residential local area network (2).

3. The method of one of claims 1 or 2, **characterized by** receiving the defined error limit (9, 9') in the device (1) from the error handling server (4) via the digital subscriber line (3); and storing (S3) the defined error limit (9, 9') in the device (1).

4. The method of one of claims 1 to 3, **characterized in that** the defined error limit (9, 9') includes a maximum error number (91) and a defined time window (92); and **in that** the data transmission errors (e) are reported for cases where the data transmission errors (e) exceed the maximum error number (91) within the defined time window (92).

5. The method of claim 4, **characterized in that** the defined error limit (9) further includes an extended time window (94) which has a duration corresponding to multiple defined time windows (92), and an extended error number (93) which is higher than the maximum error number (91); and **in that** the data transmission errors (e) are reported for cases where the data transmission errors (e) exceed the extended error number (93) within the extended time window (94).

6. The method of one of claims 1 to 5, **characterized in that** the data transmission errors (e) are determined based on checksum errors of protocol data units including at least one of TCP segments, UDP datagrams, IP packets, and protocol data units at a communication protocol layer above network and transport layers (NL, TL).

7. The method of one of claims 1 to 6, **characterized by** the error handling server (4) or a configuration server (4') adjusting a transmission rate of the digital subscriber line (3) depending on the data transmission errors (e) reported by the device (1) of the residential local area network (2).

8. A device (1) for monitoring data transmission errors (e) of a digital subscriber line (3) connected to a residential local area network (2), the device (1) comprising:
an error measurement module (11) configured to determine the data transmission errors (e) based on checksum errors of protocol data units, received in the residential local area network (2) via the digital subscriber line (3), at a communication protocol layer above physical and data link layers (PL, LL); and further **characterized by**
an error reporting module (12) configured to report the data transmission errors (e) via the digital subscriber line (3) to an error handling server (4) for cases where the data transmission errors (e) exceed a defined error limit (9, 9').

9. The device (1) of claim 8, **characterized by** a configuration module (13) configured to receive the defined error limit (9, 9') from the error handling server (4) via the digital subscriber line (3), and to store the defined error limit (9, 9') in a data store (14) of the device (1).

10. The device (1) of one of claims 8 or 9, **characterized in that** the defined error limit (9, 9') includes a maximum error number (91) and a defined time window (92); and **in that** the error reporting module (12) is configured to report the data transmission errors (e) for cases where the data transmission errors (e) exceed the maximum error number (91) within the defined time window (92).

11. The device (1) of claim 10, **characterized in that** the defined error limit (9) further includes an extended time window (94) which has a duration corresponding to multiple defined time windows (92), and an extended error number (93) which is higher than the maximum error number (91); and **in that** the error reporting module (12) is configured to report the data transmission errors (e) for cases where the data transmission errors (e) exceed the extended error number (93) within the extended time window (94).

12. The device (1) of one of claims 8 to 11, **characterized in that** the error measurement module (11) is configured to determine the data transmission errors (e) based on checksum errors of protocol data units including at least one of TCP segments, UDP datagrams, IP packets, and protocol data units at a communication protocol layer above network and transport layers (NL, TL).

13. The device (1) of one of claims 8 to 12, **characterized in that** the device (1) is implemented in a router (5) interconnecting the residential local area network (2) and the digital subscriber line (3).

14. A computer-readable medium having stored therein computer program code adapted to carry out the method of claim 1 when run on a computer.

15. The computer readable medium of claim 14, **characterized in that** the program code means are further configured to control the one or more processors of the device (1) such that the processors execute the method of one of the claims 2-7.

## Patentansprüche

1. Verfahren zum Überwachen von Datenübertragungsfehlern (e) einer digitalen Teilnehmerleitung (3), die an ein privates lokales Netz (2) angeschlossen ist, wobei das Verfahren Folgendes umfasst:
Bestimmen (S6), in einer an das private lokale Netz (2) angeschlossenen Einrichtung (1), der Datenübertragungsfehler (e) auf der Basis von Prüfsummenfehlern von über die digitale Teilnehmerleitung (3) empfangenen Protokolldateneinheiten, auf einer Kommunikationsprotokollschicht über der physischen und der Sicherungsschicht (PL, LL); und
Berichten (S10) der Datenübertragungsfehler (e) durch die Einrichtung (1) über die digitale Teilnehmerleitung (3) an einen Fehlerbehandlungsserver (4), **dadurch gekennzeichnet, dass** das Berichten für Fälle durchgeführt wird, wo die Datenübertragungsfehler (e) eine definierte Fehlergrenze (9, 9') übersteigen.

2. Verfahren nach Anspruch 1, **gekennzeichnet durch** Bestimmen (SO, SO') der definierten Fehlergrenze (9, 9') in Abhängigkeit von Anwendungen und/oder Diensten, die für das private lokale Netz (2) erforderlich sind.

3. Verfahren nach einem der Ansprüche 1 oder 2, **gekennzeichnet durch** Empfangen der definierten Fehlergrenze (9, 9') in der Einrichtung (1) von dem Fehlerbehandlungsserver (4) über die digitale Teilnehmerleitung (3); und Speichern (S3) der definierten Fehlergrenze (9, 9') in der Einrichtung (1).

4. Verfahren nach einem der Ansprüche 1 bis 3, **dadurch gekennzeichnet, dass** die definierte Fehlergrenze (9, 9') eine größte Fehleranzahl (91) und ein definiertes Zeitfenster (92) enthält; und dass die Datenübertragungsfehler (e) für Fälle berichtet werden, in denen die Datenübertragungsfehler (e) die größte Fehleranzahl (91) innerhalb des definierten Zeitfensters (92) übersteigen.

5. Verfahren nach Anspruch 4, **dadurch gekennzeichnet, dass** die definierte Fehlergrenze (9) weiterhin ein erweitertes Zeitfenster (94) enthält, das eine mehreren definierten Zeitfenstern (92) entsprechende Dauer aufweist, und eine erweiterte Fehleranzahl (93), die höher ist als die größte Fehleranzahl (91); und dass die Datenübertragungsfehler (e) für Fälle berichtet werden, in denen die Datenübertragungsfehler (e) die erweiterte Fehleranzahl (93) innerhalb des erweiterten Zeitfensters (94) übersteigen.

6. Verfahren nach einem der Ansprüche 1 bis 5, **dadurch gekennzeichnet, dass** die Datenübertragungsfehler (e) auf der Basis von Prüfsummenfehlern von Protokolldateneinheiten einschließlich TCP-Segmenten, UDP-Datagrammen, IP-Paketen und/oder Protokolldateneinheiten bei einer Kommunikationsprotokollschicht über Netzwerk- und Transportschichten (NL, TL) bestimmt werden.

7. Verfahren nach einem der Ansprüche 1 bis 6, **gekennzeichnet dadurch, dass** der Fehlerbehandlungsserver (4) oder ein Konfigurationsserver (4') eine Übertragungsrate der digitalen Teilnehmerleitung (3) in Abhängigkeit von dem von der Einrichtung (1) des privaten lokalen Netzes (2) berichteten Datenübertragungsfehler (e) einstellt.

8. Einrichtung (1) zum Überwachen von Datenübertragungsfehlern (e) einer digitalen Teilnehmerleitung (3), die an ein privates lokales Netz (2) angeschlossen ist, wobei die Einrichtung (1) Folgendes umfasst:
ein Fehlermessmodul (11), das konfiguriert ist zum Bestimmen der Datenübertragungsfehler (e) auf der Basis von Prüfsummenfehlern von Protokolldateneinheiten, die in dem privaten lokalen Netz (2) über die digitale Teilnehmerleitung (3) empfangen werden, bei einer Kommunikationsprotokollschicht über der physischen und der Sicherungsschichten (PL, LL); und weiter **gekennzeichnet durch** ein Fehlerberichtmodul (12), das konfiguriert ist zum Berichten der Datenübertragungsfehler (e) über die digitale Teilnehmerleitung (3) an einen Fehlerbehandlungsserver (4) für Fälle, in denen die Datenübertragungsfehler (e) eine definierte Fehlergrenze (9, 9') übersteigen.

9. Einrichtung (1) nach Anspruch 8, **gekennzeichnet durch** ein Konfigurationsmodul (13), das konfiguriert ist zum Empfangen der definierten Fehlergrenze (9, 9') von dem Fehlerbehandlungsserver (4) über die digitale Teilnehmerleitung (3) und zum Speichern der definierten Fehlergrenze (9, 9') in einem Datenspeicher (14) der Einrichtung (1).

10. Einrichtung (1) nach einem der Ansprüche 8 oder 9, **dadurch gekennzeichnet, dass** die definierte Fehlergrenze (9, 9') eine größte Fehleranzahl (91) und ein definiertes Zeitfenster (92) enthält; und dass das Fehlerberichtmodul (12) konfiguriert ist zum Berichten der Datenübertragungsfehler (e) für Fälle, in denen die Datenübertragungsfehler (e) die größte Fehleranzahl (91) innerhalb des definierten Zeitfensters (92) übersteigen.

11. Einrichtung (1) nach Anspruch 10, **dadurch gekennzeichnet, dass** die definierte Fehlergrenze (9) weiterhin ein erweitertes Zeitfenster (94) enthält, das eine mehreren definierten Zeitfenstern (92) entsprechende Dauer aufweist, und eine erweiterte Fehleranzahl (93), die höher ist als die größte Fehleranzahl (91); und dass das Fehlerberichtmodul (12) konfiguriert ist zum Berichten der Datenübertragungsfehler (e) für Fälle, in denen die Datenübertragungsfehler (e) die erweiterte Fehleranzahl (93) innerhalb des erweiterten Zeitfensters (94) übersteigen.

12. Einrichtung (1) nach einem der Ansprüche 8 bis 11, **dadurch gekennzeichnet, dass** das Fehlermessmodul (11) konfiguriert ist zum Bestimmen der Datenübertragungsfehler (e) auf der Basis von Prüfsummenfehlern von Protokolldateneinheiten einschließlich TCP-Segmenten, UDP-Datagrammen, IP-Paketen und/oder Protokolldateneinheiten bei einer Kommunikationsprotokollschicht über Netzwerk- und Transportschichten (NL, TL).

13. Einrichtung (1) nach einem der Ansprüche 8 bis 12, **dadurch gekennzeichnet, dass** die Einrichtung (1) in einem Router (5) implementiert ist, der das private lokale Netz (2) und die digitale Teilnehmerleitung (3) verbindet.

14. Computerlesbares Medium mit einem darin gespeicherten Computerprogrammcode, der ausgelegt ist zum Ausführen des Verfahrens nach Anspruch 1, wenn er auf einem Computer läuft.

15. Computerlesbares Medium nach Anspruch 14, **dadurch gekennzeichnet, dass** der Programmcode weiterhin konfiguriert ist zum Steuern eines oder mehrere Prozessoren der Einrichtung (1), so dass die Prozessoren das Verfahren nach einem der Ansprüche 2-7 ausführen.

## Revendications

1. Procédé pour surveiller les erreurs de transmission de données (e) d'une ligne d'abonné numérique (3) reliée à un réseau local résidentiel (2), le procédé comprenant les étapes consistant à :
établir (S6), dans un dispositif (1) relié au réseau local résidentiel (2), les erreurs de transmission de données (e) compte tenu d'erreurs de total de contrôle d'unités de données de protocole reçues, via la ligne d'abonné numérique (3), au niveau d'une couche de protocole de communication au-dessus de couches physique et de liaison de données (PL, LL) ; et
signaler (S10) les erreurs de transmission dé données (e) par le dispositif (1), via la ligne d'abonné numérique (3), à un serveur de gestion d'erreurs (4),
le procédé étant **caractérisé en ce que** ladite étape consistant à signaler les erreurs de transmission de données (e) est mise en oeuvre dans les cas où les erreurs de transmission de données (e) excèdent une limite d'erreurs définie (9, 9').

2. Procédé selon la revendication 1, **caractérisé en ce que** qu'il comprend l'étape consistant à établir (S0, S0') la limite d'erreurs définie (9, 9') en fonction d'applications et/ou de services requis pour le réseau local résidentiel (2).

3. Procédé selon l'une des revendications 1 ou 2, **caractérisé en ce qu'**il comprend les étapes consistant à recevoir la limite d'erreurs définie (9, 9') dans le dispositif (1) depuis le serveur de gestion d'erreurs (4) via la ligne d'abonné numérique (3) ; et mémoriser (S3) la limite d'erreurs définie (9, 9') dans le dispositif (1).

4. Procédé selon l'une des revendications 1 à 3, **caractérisé en ce que** la limite d'erreurs définie (9, 9') comprend un nombre d'erreurs maximal (91) et une fenêtre temporelle définie (92) ; et **en ce que** les erreurs de transmission de données (e) sont signalées dans les cas où les erreurs de transmission de données (e) excèdent le nombre d'erreurs maximal (91) au sein de la fenêtre temporelle définie (92).

5. Procédé selon la revendication 4, **caractérisé en ce que** la limite d'erreurs définie (9) comprend en outre une fenêtre temporelle étendue (94) dont la durée correspond à une pluralité de fenêtres temporelles définies (92), et un nombre d'erreurs étendu (93) qui est supérieur au nombre d'erreurs maximal (91) ; et **en ce que** les erreurs de transmission de données (e) sont signalées dans les cas où les erreurs de transmission de données (e) excèdent le nombre d'erreurs étendu (93) au sein de la fenêtre temporelle étendue (94).

6. Procédé selon l'une des revendications 1 à 5, **caractérisé en ce que** les erreurs de transmission de données (e) sont établies compte tenu d'erreurs de total de contrôle d'unités de données de protocole comprenant au moins un élément parmi le groupe constitué par des segments TCP, des datagrammes UDP, des paquets IP et des unités de données de protocole au niveau d'une couche de protocole de communication au-dessus de couches de réseau et de transport (NL, TL).

7. Procédé selon l'une des revendications 1 à 6, **caractérisé en ce que** le serveur de gestion d'erreurs (4) ou un serveur de configuration (4') règle un débit de transmission de la ligne d'abonné numérique (3) en fonction des erreurs de transmission de données (e) signalées par le dispositif (1) du réseau local résidentiel (2).

8. Dispositif (1) pour surveiller les erreurs de transmission de données (e) d'une ligne d'abonné numérique (3) reliée à un réseau local résidentiel (2), le dispositif (1) comprenant :
un module de mesure d'erreurs (11) conçu pour établir les erreurs de transmission de données (e) compte tenu d'erreurs de total de contrôle d'unités de données de protocole, reçues dans le réseau local résidentiel (2) via la ligne d'abonné numérique (3), au niveau d'une couche de protocole de communication au-dessus de couches physique et de liaison de données (PL, LL) ; et
le dispositif (1) étant en outre **caractérisé par**
un module de signalement d'erreurs (12) conçu pour signaler les erreurs de transmission de données (e), via la ligne d'abonné numérique (3), à un serveur de gestion d'erreurs (4) dans les cas où les erreurs de transmission de données (e) excèdent une limite d'erreurs définie (9, 9').

9. Dispositif (1) selon la revendication 8, **caractérisé par** un module de configuration (13) conçu pour recevoir la limite d'erreurs définie (9, 9') depuis le serveur de gestion d'erreurs (4) via la ligne d'abonné numérique (3), et mémoriser la limite d'erreurs définie (9, 9') dans une mémoire de données (14) du dispositif (1).

10. Dispositif (1) selon l'une des revendications 8 ou 9, **caractérisé en ce que** la limite d'erreurs définie (9, 9') comprend un nombre d'erreurs maximal (91) et une fenêtre temporelle définie (92) ; et **en ce que** le module de signalement d'erreurs (12) est conçu pour signaler les erreurs de transmission de données (e) dans les cas où les erreurs de transmission de données (e) excèdent le nombre d'erreurs maximal (91) au sein de la fenêtre temporelle définie (92).

11. Dispositif (1) selon la revendication 10, **caractérisé en ce que** la limite d'erreurs définie (9) comprend en outre une fenêtre temporelle étendue (94) dont la durée correspond à une pluralité de fenêtres temporelles définies (92), et un nombre d'erreurs étendu (93) qui est supérieur au nombre d'erreurs maximal (91) ; et **en ce que** le module de signalement d'erreurs (12) est conçu pour signaler les erreurs de transmission de données (e) dans les cas où les erreurs de transmission de données (e) excèdent le nombre d'erreurs étendu (93) au sein de la fenêtre temporelle étendue (94).

12. Dispositif (1) selon l'une des revendications 8 à 11, **caractérisé en ce que** le module de mesure d'erreurs (11) est conçu pour établir les erreurs de transmission de données (e) compte tenu d'erreurs de total de contrôle d'unités de données de protocole comprenant au moins un élément parmi le groupe constitué par des segments TCP, des datagrammes UDP, des paquets IP et des unités de données de protocole au niveau d'une couche de protocole de communication au-dessus de couches de réseau et de transport (NL, TL).

13. Dispositif (1) selon l'une des revendications 8 à 12, **caractérisé en ce que** le dispositif (1) est mis en oeuvre dans un routeur (5) reliant entre eux le réseau local résidentiel (2) et la ligne d'abonné numérique (3).

14. Support lisible par ordinateur dans lequel est enregistré un code de programme d'ordinateur adapté à mettre en oeuvre le procédé selon la revendication 1 lorsqu'il est exécuté sur un ordinateur.

15. Support lisible par ordinateur selon la revendication 14, **caractérisé en ce que** le code de programme est en outre conçu pour commander un ou des processeurs du dispositif (1) pour lui ou leur faire exécuter le procédé selon l'une des revendications 2 à 7.
